# EUROPEAN PATENT SPECIFICATION

(11) **EP 0 768 025 B1**
(45) Date of publication and mention of the grant of the patent: **05.01.2000**
(21) Application number: 96203570.5
(22) Date of filing: 02.07.1992
(51) Int. Cl.: A01F 12/52

(54) **Tailings return system for combine harvester**
Spreurückführeinrichtung für Mähdrescher
Dispositif de renvoi de résidus pour moissonneuse-batteuse

(43) Date of publication of application: 16.04.1997
(62) Divisional of application: 92202004.5
(73) Proprietor: NEW HOLLAND BELGIUM N.V., B-8210 Zedelgem (BE)
(72) Inventor: Strubbe, Gilbert J.I., 8210 Loppem (BE); Cromheecke, Eric L. A., 8450 Bredene (BE); Clarisse, Jasper, 8210 Loppem (BE); Strong, Russell W., Craftsbury Commons, Vermont (US)
(74) Representative: Vandenbroucke, Alberic

(56) References cited:
- EP-A- 0 091 538
- EP-A- 0 282 736
- DE-A- 2 037 446
- DE-B- 1 199 536
- DE-B- 1 245 199
- GB-A- 2 022 381
- GB-A- 2 051 541
- US-A- 3 092 116

## Description

The present invention relates to combine harvesters and more particularly to the tailings recycling device employed in such machines.

While the terms "grain", "straw", "chaff" and "tailings" are used principally throughout this description for convenience, it should be understood that these terms are not intended to be limiting. Thus "grain" refers to that part of the crop material which is threshed and separated from the discardable part of the crop material which is referred to as "straw " and "chaff". Incompletely threshed ears are referred to as "tailings". Also, the terms "forward", "rearward", "left" and "right", when cited in connection with the combine harvester and/or components thereof, are determined with reference to the direction of operative travel of the combine harvester in the field and should not be taken as limiting.

In known combine harvesters, grain is threshed and separated in a threshing and separating mechanism and the separated grain, together with impurities of all sorts, such as chaff, dust, straw particles and tailings, is fed to a cleaning mechanism for cleaning. Clean grain is collected below the cleaning mechanism and fed to a grain tank for temporary storage. The tailings are separated from the clean grain and impurities for reprocessing. This reprocessing either involves recycling the tailings through the threshing and separating mechanism or treating them in a separate tailings rethreshing means. In both cases the tailings are conveyed through an elevator which usually is of the paddle type but which also may consist of any other suitable type of conveying means such as an ejector blower or an auger conveyor.

In conventional combine harvesters, wherein the tailings are recycled through the threshing and separating mechanism, a tailings elevator extends at one side of the machine between a location beneath the cleaning mechanism, where the tailings are collected, and a location forwardly and generally above the level of the threshing means at one side thereof and at which location the elevator supplies the tailings to a transverse tailings distributing auger which is operable to spread the tailings more or less evenly across the width of the threshing mechanism. This arrangement of the tailings elevator and the distributing auger is relatively long and hence is expensive and takes up much room, whereby it is cumbersome and access to other components of the machine and drive means therefor is hampered considerably.

Instead of using a tailings distributing auger, it is proposed in DE-A-2.037.446 to discharge the tailings from the tailings elevator by means of a paddle rotor which throws the tailings against a series of chain portions, dangling transversely in front of the threshing mechanism and intended to procure a spreading effect on the tailings flow. What efficient spreading is concerned, such an arrangement however is found to be very sensitive to a.o. the tailings flow rate, the composition of the tailings and the density thereof as a result of the uncontrolled rebounding of grain kernels against the chain portions.

It has to be considered that in the presently large capacity machines, the threshing and separating devices have a considerable width, calling for high demands what the distribution of the recycled tailings is concerned. Moreover, whatever kind of distributing device is employed, even small percentages of tailings on large capacity machines represent considerable volumes whereby the recycling of these volumes of tailings through the threshing and separating mechanism often may lead to uneven loading and/or overloading of the various components both of which are disadvantageous as both ultimately result in considerable grain losses.

In other known combine harvesters, independent tailings rethreshers have been provided which are normally arranged to receive the tailings from the cleaning mechanism and to discharge the rethreshed tailings onto the grain pan of the cleaning mechanism to recycle the tailings therethrough. This arrangement is advantageous in as far as the main threshing and separating mechanism can be used to its full capacity without any risk of unevenly loading or overloading it with tailings.

Nevertheless, recycling the tailings directly through the cleaning mechanism also has some disadvantages, a major one arising from the fact that, due to the confined space inbetween the threshing and separating mechanism on the one hand and the cleaning mechanism on the other hand, it is very difficult to provide adequate tailings distributing means which satisfactorily spread the tailings evenly over the cleaning mechanism without hampering the operation of as well the threshing and separating mechanism as the cleaning mechanism.

For this reason, most tailings return devices which recycle the tailings through the cleaning mechanism do not comprise specific distributing means but try to obtain some spreading effect by forcefully ejecting the tailings onto the rear end of the grainpan or eventually onto the front portion of the sieves of the cleaning mechanism from one or both transverse sides of the harvester. A combine harvester employing a tailings recycling mechanism of such a nature is disclosed in GB-A-1.136.202. It readily will be appreciated however that without taking any special precautions, the spreading pattern of the tailings is easily disturbed due to varying volumes or density changes of recycled tailings, which result from varying crop conditions, or as a result of varying harvesting conditions, such as operation on transversely inclined slopes.

The spreading pattern of tailings may be improved by the installation of a deflector plate adjacent the outlet of the tailings recycling mechanism, as shown in GB-A-2.051.541. However such straight deflector plates are not operable to provide an optimal spreading pattern for a wide range of mass flow rate conditions.

Moreover, it is well known in the art that the reciprocating action of the cleaning mechanism in general and the grainpan in particular procures a preconditioning effect to the layer of crop material (including grain, chaff and straw particles), which is separated by the threshing and separating mechanism and is transported on the grain pan, whereby the grain kernels contained in said layer are urged to sink therethrough and to concentrate at a bottom portion thereof in order to prepare the layer for subsequent cleaning action by the cleaning sieves. Accordingly, discharging the tailings on top of the transported layer at a location behind the threshing and separating area i.e. already a considerable distance away from the front of the cleaning mechanism and thus at a location where a substantial degree of preconditioning already has occurred, completely undoes the preconditioned state of the layer already obtained.

Furthermore, a cleaning mechanism of a combine harvester normally is composed of separate sections, extending lengthwise thereof. Each section is separated from adjacent sections by upstanding dividers which are present as well on the grainpan as on the cleaning sieves and which are operable to allow only for restricted sideways movement of crop material transported by the cleaning mechanism. When discharging the tailings from a transverse side of the harvester under a sharp angle onto the top of the layer of crop material supported and transported by the grainpan, the grain kernels contained in said tailings have a tendency to penetrate said layer and to continue their trajectory until movement thereof is restricted by a divider, delimiting, in that direction, the section in which the grain kernels have been projected. As a result of this action, grain starts to accumulate on one side of a section whereas the chaff material of the transported layer, which is much lighter than the grain, is dispelled to the other transverse side of the section whereby the even distribution of grain and chaff transversely of a section becomes disturbed. It is clear that concentrating the grain on one side of a section and the chaff material at the other side thereof, results in over- and underloading of the respective section sides, leading ultimately to grain losses at both sides of a section.

It therefore is the objective of the present invention to overcome or at least attenuate the aforementioned drawbacks and to provide a simple and effective tailings return system which evenly distributes the tailings over a layer of crop material transported by the cleaning mechanism without disturbing the interior distribution of the crop material of said layer.

According to the present invention, a combine harvester is provided comprising:
- a threshing and separating mechanism;
- a cleaning mechanism disposed to receive threshed and separated crop material from the threshing and separating mechanism and operable to separate tailings therefrom;
- tailings rethresher means associated with the cleaning mechanism for rethreshing the tailings separated therein;
- tailings conveyor means for recycling rethreshed tailings from the rethresher means to the cleaning mechanism; and
- a deflector operatively associated with a discharge aperture of said tailings conveyor means to receive the tailings emerging therefrom and spread said tailings across the cleaning mechanism.

The combine harvester is characterized in that said deflector comprises a plurality of curved deflector strips, extending in the direction of operative flow of crop material thereover; the arrangement being such that each deflector strip is operable to deflect the crop material passing thereover in a generally predetermined direction which differs from the directions obtained with the other deflector strips.

The tailings conveyor means comprises a cranked outlet duct helping to concentrate the tailings flow against one side thereof. The recycled tailings, emerging from the discharge aperture of the outlet duct in a concentrated layer, are evenly spread over the width of the grain pan by means of the curved deflector whilst being projected forwardly against a screen, which is suspended from a concave of the threshing and separating mechanism. The tailings impinging on the screen are slowed down and fall freely onto the grain pan extending underneath.

A combine harvester, embodying the present invention, will now be described in greater detail, by way of example, with reference to the accompanying drawings, in which :
Figure 1 is a schematic side view of a combine harvester incorporating the present invention,
Figure 2 is a sectional view, to a larger scale, of the components indicated at II in Figure 1,
Figure 3 is a partial sectional top view taken along the line III-III of Figure 2, and
Figure 4 is a perspective view, to a larger scale, of a component of Figure 3, as seen in the direction of arrow F.

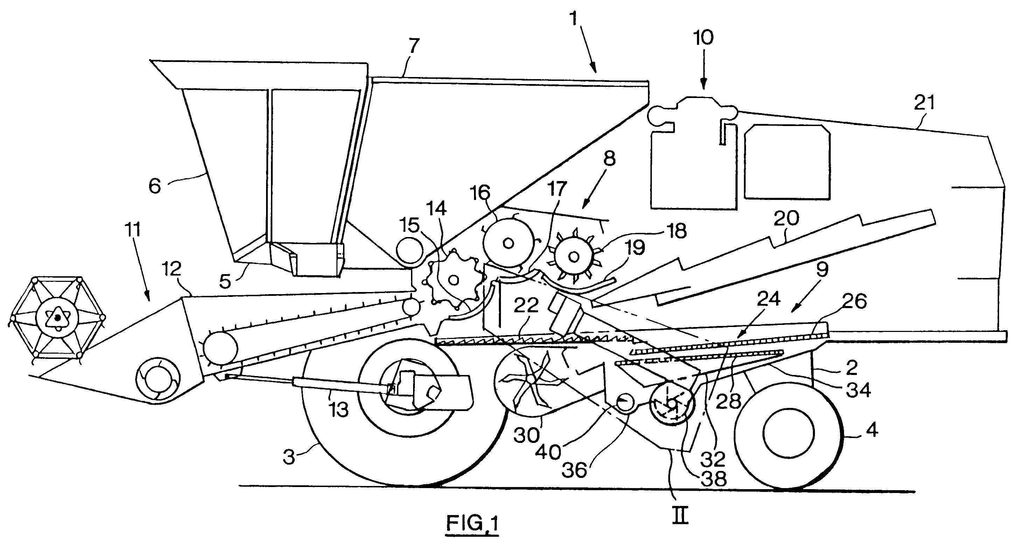

With reference to the drawings, particularly Figure 1, a combine harvester, generally indicated at 1, comprises a main chassis or frame 2 supported on a front pair of drive wheels 3 and a rear pair of steerable wheels 4 (only one wheel of each pair being shown). Supported on the main chassis 2 are on operator's platform 5, with operator's cab 6, a grain tank 7, a threshing and separating mechanism 8, a grain cleaning mechanism 9 and a power plant or engine 10. A conventional header 11 and straw elevator 12 extend forwardly of the main chassis 2 and the header 11 is pivotally secured to the chassis 2 for generally vertical movement which is controlled by extensible hydraulic cylinders 13.

As the combine harvester 1 is propelled forwardly over a field with standing crop, the latter is severed from the stubble by a sickle bar on the header 11, whereafter the header 11 and the straw elevator 12 supply the cut crop to the threshing and separating mechanism 8. The crop received therein is threshed and separated, that is to say, the crop is rubbed and beaten, whereby the grain, seed or the like, is loosened and separated from the straw, coils or other discardable part of the crop.

The combine harvester illustrated in Figure 1 comprises a conventional threshing and separating mechanism including a rotatable threshing cylinder 14 cooperable with a stationary threshing concave 15, a so-called straw beater 16 with a cooperable beater grate 17, and a separator rotor 18 with associated concave 19. Conventional straw walkers 20 are operable, in use, to discharge a mat of remaining crop material (i.e. mainly straw as the grain is separated therefrom) through a straw hood 21.

The grain cleaning mechanism 9 exemplified in Figure 1 commonly is disposed underneath the threshing and separating mechanism 8 to receive the separated grain on a grain pan 22. Generally, the cleaning mechanism 9 is operatively connected to an eccentric drive (not shown) to effect a generally fore-and-aft reciprocating movement thereof to convey the threshed grain in a rearward direction. Sieve means 24 are positioned rearwardly of the grain pan 22 to receive threshed grain conveyed rearwardly therefrom and clean the threshed grain from chaff, tailings and other debris conveyed therewith. Typically, the sieve means 24 include an upper chaffer sieve 26 and a lower cleaning sieve 28 mounted for opposing fore-and-aft reciprocating movement. A cleaning fan 30 is disposed below the grain pan 22 and forwardly of the sieves 26, 28 to blow air upwardly through the latter in order to remove chaff and debris from the grain.

A clean grain collecting chute 32 and a tailings collecting chute 34, which are generally known in the art, are disposed below the sieves 26 and 28 and are arranged to discharge clean grain and tailings received from said sieves into a clean grain auger trough 36 and a tailings auger trough 38, respectively. The clean grain auger trough 36 extends transversely of the combine harvester and contains a clean grain auger 40 having a discharge end adjacent one side of the cleaning mechanism 9 to which collected grain is conveyed. A clean grain elevator (not shown) extends from said discharge end, alongside the threshing and separating mechanism 8 for elevating the clean grain into the grain tank 7 for temporary storage.

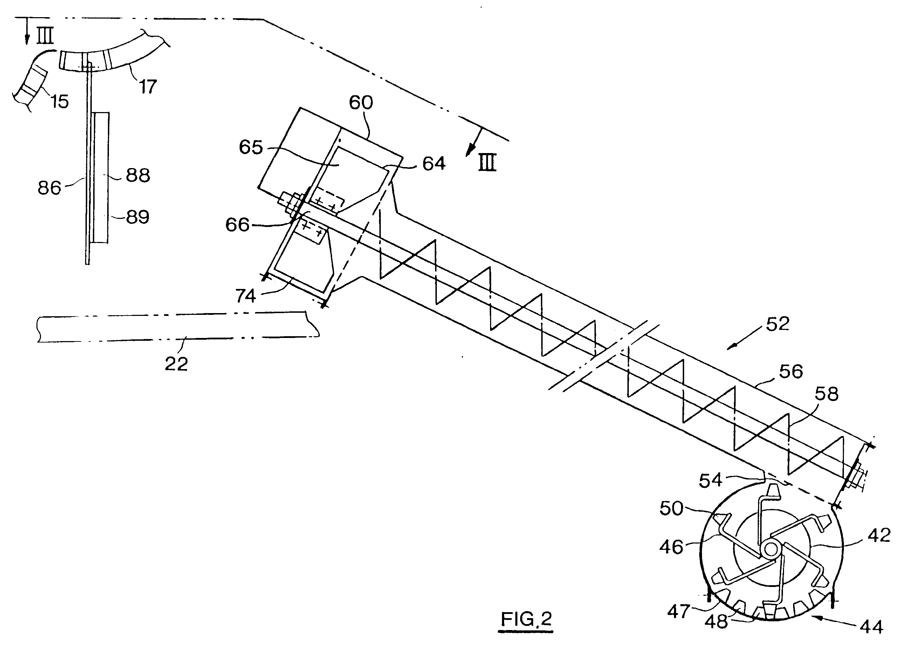

The tailings auger trough 38 also extends transversely of the machine and comprises a discharge end at the other side of the cleaning mechanism 9 when compared to the location of the discharge end of the clean grain auger 40. Referring specifically to Figure 2, a tailings auger 42 is disposed in the tailings auger trough 38 for conveying the collected tailings towards a tailings rethresher device, generally indicated at 44 and comprising a.o. a tailings rethresher rotor 46 provided in a housing 47. Stationary aggressive rethresher rasps 48, mounted on a section of the inside of the housing 47, cooperate with rethresher rasps 50 carried by the rotor 46 to thoroughly rethresh the tailings passing inbetween. The operation of the tailings rethresher device as briefly described hereabove is known in the art and is disclosed in more details in GB-B-2.051.541, to which reference is made.

A tailings return conveyor 52 extends between an outlet 54 of the tailings rethresher 44 and an aperture in the combine side wall above the level of the grain pan 22. The conveyor 52 is inclined upwardly in a forward direction and comprises a cylindrical auger tube 56 in which an auger 58 is installed. At the discharge end, the auger tube 56 flares outwardly and is coupled to an impeller housing 60 which extends coaxially with the auger tube 56 and has a discharge opening 62 coinciding with the opening in the combine side wall above the grain pan 22. A rotor 64 having impeller blades 65 mounted on an extension 66 of the shaft of the auger 58, is provided in the housing 60 and is operable to discharge the rethreshed tailings towards the grain pan 22.

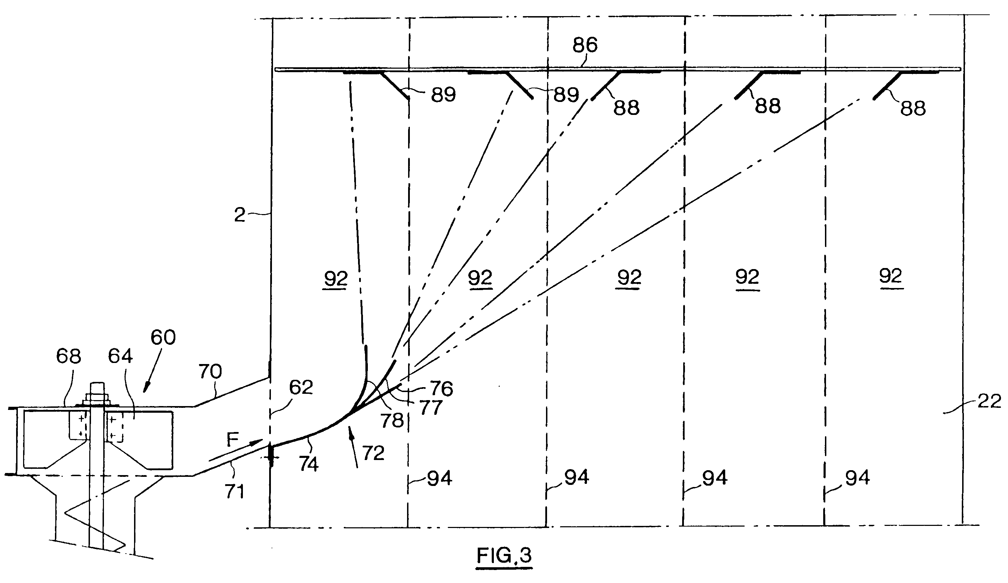

As seen in top view in Figure 3, the impeller housing 60 has a cranked shape, the function of which will be explained furtheron, and which is composed, on the one hand, by a generally cylindrical portion 68 housing the rotor 64 which is perpendicularly oriented relative to the machine frame and, on the other hand, by a parallelogram-shaped outlet portion 70 which is angled forwardly relative to the machine frame.

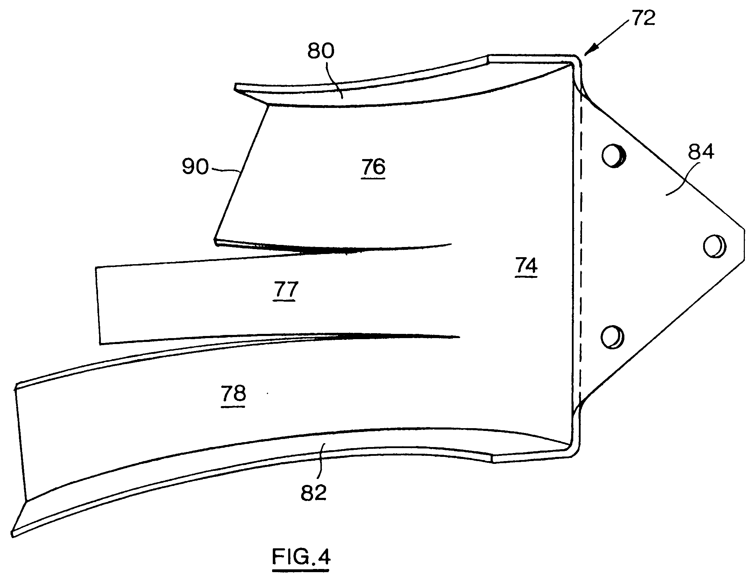

As an extension of the rear wall 71 (as seen in the direction of operative travel of the harvester) of the outlet portion 70, a deflector 72 is disposed to spread the discharged tailings substantially evenly across the width of the grain pan 22. The deflector 72, which is only schematically shown in Figure 3, comprises a generally straight portion 74 in alignment with the rear wall of the housing 70 already mentioned, followed by a series of individual, curved deflector strips 76 to 78, positioned one above the other and of which the individual radius of curvature increases from the deflector strip 76 over the strip 77 to the strip 78, i.e. from the top to the bottom of the deflector 72. As best seen in the perspective view of Figure 4, the deflector 72 further comprises extending flanges 80 and 82, delimiting the deflector 72 at the top and bottom respectively, giving it a channel-shaped form, and a mounting plate 84 for attaching the deflector 72 to the machine frame 2 interiorly thereof.

Turning again to figures 2 and 3, a screen or canvas 86, which is attached to a front portion of the beater grate 17 and hanging down therefrom towards the grain pan 22, is operable to form an obstruction for grain material separated through the threshing concave 15 in a rearward direction in order to prevent said material from being thrown and scattered directly onto a rearward portion of the grain pan 22, i.e. close to the grain receiving portion of the chaffer sieve 26. Indeed, if the foregoing would happen to occur, then the pre-conditioning action of the grain pan 22 would be disturbed in as much as the grain thrown upon the layer of crop material at the rearward region of the grain pan 22 would have insufficient time to penetrate said layer, thereby running the risk of not reaching the sieve surface and of being discharged, together with chaff material, onto the ground. The screen 86 stops short of the grain pan 22 in order to allow crop material, separated through the thresher concave 15 and piled up on the front portion of the grain pan 22, to pass freely underneath.

Vertically affixed to the rearward side of the screen 86 or in other words facing in the direction of the outlet of the cleaning mechanism 9, a number of angled members 88 and 89 are provided for a purpose to be described furtheron.

In operation of the combine harvester 1, the rethreshed tailings are conveyed by the auger 58 and discharged in the impeller housing 60 where they are engaged and transported in an overshot manner by the impeller rotor 64. The impeller blades 65 may be extended (not shown) into the auger tube 56 to ensure that, when only small volumes of tailings are recycled, all transported crop material is given enough speed before leaving the housing 60. The tailings thus leave the impeller housing 60 at the upper region thereof in a generally concentrated flow whereby a substantial part thereof is projected against the rear wall 71 of the outlet housing 70 in a manner such that the tailings flow is spread over the total height of said wall 71 in a virtually condensed layer. Upon leaving the housing 70, the threshed tailings are tangentially intercepted by the deflector 72 and, dependent on the trajectory followed thereover, are deflected to the one or other side of the machine. Indeed, tailings travelling at the upper region of the deflector 72 encounter the deflector strip 76 with its large radius of curvature whereby the tailings flowing thereover are guided diagonally forwardly across and above the grain pan 22 towards the opposite side thereof. The deflector strip 77 forming a middle part of the deflector 72 is operable to direct the tailings more to a central area above the grain pan 22. Finally, the strip 78 is curved such that the part of the tailings flow passing thereover, rather than being thrown to the side of the harvester opposite to the discharge opening 62, is smoothly deflected in a generally straight forward direction so as to keep said part of the tailings at the same side as where it is discharged.

Depending on the degree of inclination of the outlet portion 70, some tailings may leave the impeller housing 60 without engaging the rear wall 71, but nevertheless will encounter the deflector 72 and consequently will be subjected to the deflecting action thereof.

The deflector 72 thus is highly efficient to spread the rethreshed tailings substantially evenly across the width of the grainpan 22. To even further improve the spreading effect of the deflector 72 and as has been exemplified in Figure 4 in connection with only one of the deflector strips 76 to 78, the strip 76 is provided with a slanting discharge edge 90, whereby crop material passing thereover at the upper region thereof is released earlier from the strip 76, and hence is thrown further to the right as seen in Figure 3, when compared to crop travelling over a lower portion of said strip 76. It will be clear from the foregoing that also the strips 77 and 78 may be provided with a slanting discharge edge in order to obtain a same effect.

The main purpose of the deflector 72 is not only to procure an even spreading, but also to direct the tailings flow in a forward direction with the aim to deliver said tailings to the grain pan 22 as far forwardly as technically and functionally possible. The reasoning therebehind will be clear to anyone skilled in the art, namely prolonging the time that the tailings will spend on the grain pan 22 and thus ensuring that the grain contained in the tailings will have sufficient time to reach the lower slice of the transported layer of crop material before being processed by the cleaning sieves.

A still further important characteristic of the deflector 72 is to avoid that recycled tailings are discharged either upwardly towards and into the threshing and separating concaves or that they are projected directly into the crop layer on the grain pan 22. To this end, the design of the deflector 72 in combination with the configuration of the impeller housing 60 is such that the recycled tailings are released from the deflector 72 in a generally horizontally directed stream. The upstanding flanges 80 and 82, which delimit the deflector at respectively the upper and lower end thereof, are also provided in this respect. Indeed, the flange 80 prevents crop material from leaving the deflector strip 76 in an upward direction as said material otherwise would interfere with the threshing and separating function of the threshing and separating concaves. The flange 82 operates in a comparable manner in that tailings which have a tendency to project straight into the layer on the grain pan 22 are intercepted by the flange 82 and redirected generally horizontally.

In as much as the recycled tailings travel along the deflector 72 in a rather concentrated layer, the flanges 80 and 82 may be minimal in height but nevertheless perform as expected. Hence, as seen in a vertical direction, the deflector 72 takes up only a confined space whereby the separating action of the concaves thereabove is not impeded.

The stream of tailings spread by the deflector 72 is intersected by the screen 86, which is disposed at right angles to the driving direction and which extends the full transverse width of the grain pan 22 at a location offset to the front of the tailings discharge area 62. The screen 86 preferable is made of an elastic material such as rubber for example in order to considerably reduce or completely absorb the kinetic energy of the tailings impinging thereon. Consequently, the tailings are slowed down instantly and drop or rain down on the grain pan 22 in a generally vertical direction, mainly under influence of gravitational forces alone. The angled members 88 provided on the screen 86 at the right hand side of the machine are generally oriented in the direction of the deflector 72 and are operable, as a precautionary measure, to restrict horizontal sideways movement of tailings material in case it nevertheless still would contain enough energy after impact on the screen 86 to slide therealong. This material indeed will be caught in the sharp angle between such a member 88 and the screen 86 and will equally fall downwardly onto the grain pan 22. The other angled members 89 at the left hand side of the machine and thus nearest to the deflector 72 are pointing away therefrom and as such present an additional deflector surface for the tailings flow in order to further improve the delivery of tailings to the left hand side of the grain pan 22.

As shown in Figure 3, the grain pan 22 is divided in several sections 92 separated from each other by divider plates 94. Although not compulsory, the positioning and the total number of angled members 88 and 89 more or less corresponds to the arrangement of the sections 92 and, in combination with the spreading effect obtained by the deflector 72, ensures that each section 92 receives an equal amount of tailings in a manner such that the interior distribution of the crop material in each section 92 is not disturbed. Of course, the number of angled members 88 and 89 is also related to the effective width of the cleaning mechanism 9 and also the curvature of the deflector strips 76 to 78 is related to said width.

Conclusively, a tailings return system constructed in accordance with the present invention offers a simple but nonetheless effective means to spread the tailings evenly over a forward portion of the grain pan 22 without hampering the operation of the threshing and separating mechanism and without disturbing the grain and chaff distribution in the grain pan sections, irrespective of the volumes and composition of the tailings recycled.

Although the present invention has been described with reference to a tailings return system of the auger type, it will be clear that it should not be limited thereto but equally applies to any other suitable type of conveyor means such as an ejector blower for example. In a further alternative arrangement, a tailings return device is provided at both lateral sides of the combine harvester 1; each such device thus recycling only half of the tailings amount towards the grain cleaning mechanism 9. A deflector provided at each discharge opening is operative either to spread the recycled tailings of one side over only half the width of the grain pan 22 or to spread them nevertheless over the total width thereof whereby, in the latter case, the generally oppositely directed streams of tailings are interlaced. Naturally, in each case, a flexible screen is provided to intercept the tailings flow. The screen is not necessarily provided with angled members but may have a corrugated shape to procure a comparable effect.

The present invention furthermore advantageously can be incorporated in tailings return devices which recycle the tailings through the threshing and separating mechanism of a combine harvester whereby the even distribution of the tailings across the transversal width of such a mechanism is ensured in a simple and effective manner.

Finally, in a still further embodiment, the tailings again are recycled to the cleaning mechanism 9 but at a location straight underneath the threshing concave 15 proximate to the front end of the grain pan 22. In this arrangement, the tailings are deflected rearwardly and projected against the front face of the screen 86, whereupon the angled members 88, 89 have been provided.

## Claims

1. A combine harvester (1) comprising :
- a threshing and separating mechanism (8);
- a cleaning mechanism (9) disposed to receive threshed and separated crop material from the threshing and separating mechanism (8) and operable to separate tailings therefrom;
- tailings rethresher means (44) associated with the cleaning mechanism (9) for rethreshing the tailings separated therein;
- tailings conveyor means (52) for recycling rethreshed tailings from the rethresher means (44) to the cleaning mechanism (9); and
- a deflector (72) operatively associated with a discharge aperture (62) of said tailings conveyor means (52) to receive the tailings emerging therefrom and spread said tailings across the cleaning mechanism (9),
characterized in that said deflector (72) comprises a plurality of curved deflector strips (76 to 78), extending in the direction of operative flow of crop material thereover; the arrangement being such that each deflector strip (76, 77 or 78) is operable to deflect the crop material passing thereover in a generally predetermined direction which differs from the directions obtained with the other deflector strips (76, 77 or 78).

2. A combine harvester (1) according to claim 1, characterized in that the deflector strips (76 to 78) have different radii of curvature.

3. A combine harvester (1) according to claim 1 or 2, characterized in that at least one deflector strip (76) is provided with a slanting discharge edge (90).

4. A combine harvester (1) according to any of the preceding claims, characterized in that the directions of deflection, obtained when theoretically crossing the deflector (72) from top to bottom, vary from the transverse side of the cleaning mechanism (9) furthermost of said deflector (72) towards the transverse side of the cleaning mechanism (9) nearest thereto.

5. A combine harvester (1) according to any of the preceding claims, characterized in that the deflector (72) comprises upstanding flanges (80, 82) delimiting said deflector (72) at its upper and lower edge for preventing crop material passing thereover from being deflected in an upward, respectively downward direction.

6. A combine harvester (1) according to any of the preceding claims, characterized in that the tailings conveyor means (52) comprises an outlet portion (70), inclined relative to the fore-and-aft extending axis of the combine harvester (1) and of which the discharge aperture (62) coincides with an opening in the combine frame (2).

7. A combine harvester (1) according to claim 6 characterized in that the tailings conveyor means (52) further comprises :
- an auger-like conveyor (58) extending in a housing (56) between the tailings rethresher means (44) and the cleaning means (9); and
- an impeller rotor (64), mounted coaxially on the discharge end of said conveyor (58) and surrounded by an impeller housing (68) which is positioned at right angles to the machine frame (2); said housing (68) being operatively connected to the outlet portion (70) and defining an angle inbetween in a manner such that a substantial portion of the recycled tailings impelled by the impeller rotor (64) is projected against and along a facing wall portion (71) of said outlet portion (70) thereby emerging from the discharge aperture (62) in a substantially coherent stream.

8. A combine harvester (1) according to claim 7, characterized in that the deflector (72) registers with the facing wall portion (71) of the outlet portion (70) and deflects the recycled tailings in a generally horizontal stream above and across the cleaning mechanism (9).

9. A combine harvester (1) according to any of the preceding claims, characterized in that a screen (86) is provided above the cleaning mechanism (9) at a location offset from a discharge aperture (62) of the tailings conveyor means (52); said screen (86), in use, intersecting the tailings flow and being operable to absorb the kinetic energy thereof which is imparted thereto by the tailings conveyor means (52).

10. A combine harvester (1) according to claim 9 characterized in that the screen (86) is made of a resilient material such as rubber.

11. A combine harvester (1) according to claim 9 or 10, characterized in that, across the width of the screen (86) and oriented perpendicularly to the tailings flow, a number of angled members (88, 89) are attached to said screen (86) for either refraining the tailings flow from shifting sideways along the surface thereof, or, to the contrary, imposing a sideways shifting effect on said tailings flow.

12. A combine harvester (1) according to any of the claims 9 to 11, characterized in that the screen (86) substantially extends the full transverse width of a grain pan (22) of the cleaning mechanism (9), is vertically suspended from a concave (17) of the threshing and separating mechanism (8) and reaches towards the grain pan surface (22), stopping short thereof.

## Patentansprüche

1. Mähdrescher (1) mit:
- einem Dresch- und Trennmechanismus (8),
- einem Reinigungsmechanismus (9), der zum Empfang des gedroschenen und abgetrennten Erntematerials von dem Dresch-und Trennmechanismus (8) angeordnet ist und zur Abtrennung von Überkehr von dem Erntematerial betreibbar ist,
- einer Überkehr-Nachdrescheinrichtung (44), die dem Reinigungsmechanismus (9) zugeordnet ist, um die in diesem abgetrennte Überkehr nachzudreschen,
- einer Überkehr-Fördereinrichtung (52) zur Rückführung der nachgedroschenen Überkehr von der Nachdrescheinrichtung (44) zu dem Reinigungsmechanismus (9), und
- einer Ablenkeinrichtung (72), die betriebsmäßig einer Auslaßöffnung (62) der Überkehr-Fördereinrichtung (52) zugeordnet ist, um die hieraus austretende Überkehr aufzunehmen und diese Überkehr über den Reinigungsmechanismus (9) hinweg zu verteilen,
dadurch gekennzeichnet, daß die Ablenkeinrichtung (72) eine Vielzahl von gekrümmten Ablenkstreifen (76, 78) umfaßt, die sich in der Richtung der Betriebsströmung des Erntematerials über diese hinweg erstrecken, wobei die Anordnung derart ist, daß jeder Ablenkstreifen (76, 77 oder 78) betreibbar ist, um das über diesen hinweglaufende Erntematerial in einer allgemein vorgegebenen Richtung abzulenken, die von den Richtungen abweicht, die mit den anderen Ablenkstreifen (76, 77 oder 78) erzielt werden.

2. Mähdrescher (1) nach Anspruch 1,
dadurch gekennzeichnet, daß die Ablenkstreifen (76 bis 78) unterschiedliche Krümmungsradien aufweisen.

3. Mähdrescher (1) nach Anspruch 1 oder 2,
dadurch gekennzeichnet, daß zumindest ein Ablenkstreifen (76) mit einer geneigten Abgabekante (90) versehen ist.

4. Mähdrescher (1) nach einem der vorhergehenden Ansprüche,
dadurch gekennzeichnet, daß die Ablenkrichtungen, die erzielt werden, wenn die Ablenkeinrichtung (72) theoretisch von der Oberseite zur Unterseite überquert wird, sich von der von der Ablenkeinrichtung (72) am weitesten entfernten Querseite des Reinigungsmechanismus in Richtung auf die der Ablenkeinrichtung (72) nächstgelegene Querseite des Reinigungsmechanismus (9) ändern.

5. Mähdrescher (1) nach einem der vorhergehenden Ansprüche,
dadurch gekennzeichnet, daß die Ablenkeinrichtung (72) vorspringende Flansche (80, 82) aufweist, die die Ablenkeinrichtung (72) an deren Ober- und Unterkante begrenzen, um zu verhindern, daß über die Ablenkeinrichtung laufendes Material in einer nach oben bzw. nach unten gerichteten Bewegung abgelenkt wird.

6. Mähdrescher (1) nach einem der vorhergehenden Ansprüche,
dadurch gekennzeichnet, daß die Überkehr-Fördereinrichtung (52) einen Auslaßabschnitt (70) aufweist, der gegenüber der Längsachse des Mähdreschers (1) geneigt ist und dessen Auslaßöffnung (62) mit einer Öffnung in dem Mähdreschergehäuse (2) zusammenfällt.

7. Mähdrescher (1) nach Anspruch 6,
dadurch gekennzeichnet, daß die Überkehr-Fördereinrichtung (52) weiterhin folgende Teile aufweist:
- einen schneckenfördererartigen Förderer (58), der sich in einem Gehäuse (56) zwischen der Überkehr-Nachdrescheinrichtung (44) und den Reinigungseinrichtungen (9) erstreckt,
- einen Schaufelradrotor (64), der koaxial auf dem Auslaßende des Förderers (58) befestigt ist und von einem Schaufelradgehäuse (68) umgeben ist, das unter rechten Winkeln zum Maschinenrahmen (2) angeordnet ist, wobei das Gehäuse (68) betriebsmäßig mit dem Auslaßabschnitt (70) verbunden ist und einen Winkel mit diesem derart bildet, daß ein erheblicher Teil der zurückgeführten Überkehr, die von dem Schaufelradrotor (64) angetrieben wird, gegen einen darauf gerichteten Wandabschnitt des Auslaßabschnittes (70) und entlang dieses Wandabschnittes geschleudert wird, so daß dieser Teil der Überkehr aus der Auslaßöffnung (62) in einem im wesentlichen zusammenhängenden Strom austritt.

8. Mähddrescher (1) nach Anspruch 7,
dadurch gekennzeichnet, daß die Ablenkeinrichtung (72) mit dem darauf gerichteten Wandabschnitt (71) des Auslaßabschnittes (70) ausgerichtet ist und die zurückgeführte Überkehr in einem allgemein horizontalen Strom oberhalb und über den Reinigungsmechanismus (9) hinweg ablenkt.

9. Mähdrescher (1) nach einem der vorhergehenden Ansprüche,
dadurch gekennzeichnet, daß ein Abschirmelement (86) oberhalb des Reinigungsmechanismus (9) an einer gegenüber einer Auslaßöffnung (62) der Überkehr-Fördereinrichtung (52) versetzten Stelle vorgesehen ist, wobei das Abschirmelement (86) im Gebrauch die Überkehrströmung abfängt und betreibbar ist, um deren kinetische Energie zu absorbieren, die der Überkehrströmung durch die Überkehr-Fördereinrichtungen (52) erteilt wird.

10. Mähdrescher (1) nach Anspruch 9,
dadurch gekennzeichnet, daß das Abschirmelement (86) aus einem elastischen Material, wie z.B. Gummi, hergestellt ist.

11. Mähdrescher (1) nach Anspruch 9 oder 10,
dadurch gekennzeichnet, daß über die Breite des Abschirmelementes (86) und in einer Richtung allgemein senkrecht zur Überkehrströmung eine Anzahl von abgewinkelten Teilen (88, 89) an dem Abschirmelement ((6) befestigt ist, um entweder die Überkehrströmung an einer seitlichen Verschiebung entlang der Oberfläche des Abschirmelementes zu hindern oder umgekehrt eine seitliche Verschiebungswirkung auf die Überkehrströmung auszuüben.

12. Mähdrescher (1) nach einem der Ansprüche 9 bis 11,
dadurch gekennzeichnet, daß sich das Abschirmelement (86) im wesentlichen über die volle Querbreite einer Körnerpfanne (22) des Reinigungsmechanismus (9) erstreckt, in Vertikalrichtung an einem Korb (17) des Dresch- und Trennmechanismus (8) aufgehängt ist und in Richtung auf die Körnerpfannenoberfläche (22) reicht und kurz vor dieser endet.

## Revendications

1. Moissonneuse-batteuse (1) comprenant:
- un mécanisme de battage et de séparation (8);
- un mécanisme de nettoyage (9) disposé pour recevoir le matériau de récolte battu et séparé, issu du mécanisme de battage et de séparation (8), et dont la fonction est d'en séparer des otons;
- un moyen de rebattage des otons (44), associé au mécanisme de nettoyage (9), et destiné à rebattre les otons qui y sont séparés, et
- un moyen de transport des otons (52) pour recycler les otons rebattus, issus du moyen de rebattage (44), vers le mécanisme de nettoyage (9); et
- un déflecteur (72) associé fonctionnellement avec une ouverture de déversement (62) dudit moyen de transport d'otons (52) pour recueillir les otons émergeant de ce dernier et répartir lesdits otons à travers le mécanisme de nettoyage (9);
caractérisée en ce que ledit déflecteur (72) comprend une pluralité de plaquettes de déflexion (76 à 78), s'étendant dans la direction du flux fonctionnel de matériau de récolte sur celles-ci; l'arrangement étant tel que la fonction de chaque plaquette de déflexion (76, 77 ou 78) est de dévier le matériau de récolte passant sur cette dernière suivant une direction généralement prédéterminée qui diffère des directions obtenues avec les autres plaquettes de déflexion (76, 77 ou 78).

2. Moissonneuse-batteuse (1) selon la revendication 1, caractérisée en ce que les plaquettes de déflexion (76 à 78) possèdent différents rayons de courbure.

3. Moissonneuse-batteuse (1) selon la revendication 1 ou 2, caractérisée en ce qu'au moins une plaquette de déflexion (76) est pourvue d'une arête (90) de déchargement inclinée.

4. Moissonneuse-batteuse (1) selon l'une quelconque des revendications précédentes, caractérisée en ce que les directions de déflexion, obtenues en croisant théoriquement le déflecteur (72) du sommet vers la base, varient du côté latéral du mécanisme de nettoyage (9) le plus éloigné dudit déflecteur (72) vers le côté latéral du mécanisme de nettoyage (9) le plus proche de lui.

5. Moissonneuse-batteuse (1) selon l'une quelconque des revendications précédentes, caractérisée en ce que le déflecteur (72) comprend des rebords perpendiculaires (80, 82) délimitant ledit déflecteur (72) à ses bords supérieur et inférieur pour éviter le passage, au-delà d'eux, du matériau de récolte en étant dévié respectivement dans une direction vers le haut et vers le bas.

6. Moissonneuse-batteuse (1) selon l'une quelconque des revendications précédentes, caractérisée en ce que le moyen de transport (52) d'otons comprend une portion (70) de sortie, inclinée par rapport à l'axe longitudinal de la moissonneuse-batteuse (1) et dont l'ouverture (62) de déversement coïncide avec une ouverture dans le châssis (2) de la moissonneuse.

7. Moissonneuse-batteuse (1) selon la revendication 6, caractérisée en ce que le moyen de transport (52) des otons comprend en outre:
- un transporteur du type à vis (58) se prolongeant par un logement (56), situé entre le moyen de rebattage (44) des otons et les moyens de nettoyage (9); et
- un rotor à hélice (64), monté coaxialement à l'extrémité de déversement dudit transporteur (58) et entouré d'un logement d'hélice (68) positionné perpendiculairement au châssis de la machine (2); ledit logement (68) étant relié fonctionnellement à la portion de sortie (70) et définissant un angle avec celle-ci de telle manière qu'une partie substantielle des otons recyclés entraînés par le rotor à hélice (64) est projetée contre et le long d'une partie de paroi (71) dressée de ladite portion de sortie (70) et émerge ainsi de l'ouverture de déversement (62) sous forme d'un flux pratiquement cohérent.

8. Moissonneuse-batteuse (1) selon la revendication 7, caractérisée en ce que le déflecteur (72) coïncide avec la partie de paroi (71) faisant face à la portion (70) de sortie, et dévie les otons recyclés suivant un flux généralement horizontal au-dessus et au travers du mécanisme de nettoyage (9).

9. Moissonneuse-batteuse (1) selon l'une quelconque des revendications précédentes, caractérisée en ce qu'un écran (86) est prévu au-dessus du mécanisme de nettoyage (9) à un endroit écarté de l'ouverture (62) de déversement du moyen de transport (52) d'otons; ledit écran (86) recoupant, en fonctionnement, le flux d'otons, et dont la fonction est d'absorber leur énergie cinétique que leur a communiquée le moyen de transport (52) d'otons.

10. Moissonneuse-batteuse (1) selon la revendication 9 caractérisée en ce que l'écran (86) est constitué d'un matériau résilient tel que du caoutchouc.

11. Moissonneuse-batteuse (1) selon la revendication 9 ou 10, caractérisée en ce que, en travers de la largeur de l'écran (86) et en orientation perpendiculaire au flux d'otons sont fixés des éléments orientés (88, 89) audit écran (86) pour soit contrecarrer le déplacement latéral du flux d'otons sur leur surface, soit, au contraire, pour appliquer un effet de déplacement latéral audit flux d'otons.

12. Moissonneuse-batteuse (1) selon l'une quelconque des revendications 9 à 11, caractérisée en ce que l'écran (86) s'étend substantiellement sur l'ensemble de la largeur du couloir (22) à grain du mécanisme de nettoyage (9), est suspendu verticalement à la grille de battage (17) du mécanisme de battage et de séparation (8) et se prolonge en direction de la surface (22) du couloir à grain, en s'arrêtant à proximité de celle-ci.
